(19) Europäisches Patentamt
European Patent Office
Office européen des brevets

(11) **EP 3 940 831 A1**

(12) **EUROPEAN PATENT APPLICATION**

(43) Date of publication:
**19.01.2022 Bulletin 2022/03**

(21) Application number: **21185519.2**

(22) Date of filing: **14.07.2021**

(51) International Patent Classification (IPC):
***H01M 8/1018*** *(2016.01)* ***B01D 24/00*** *(2006.01)*

(52) Cooperative Patent Classification (CPC):
**H01M 8/1018; B01D 23/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.07.2020 TW 109124284**

(71) Applicant: **Microcosm Technology Co., Ltd.**
**Tainan City (TW)**

(72) Inventors:
- **Yeh, Chun-Ting**
  **741 Tainan City (TW)**
- **Jheng, Sih-Ci**
  **741 Tainan City (TW)**
- **Lai, Bo-Hung**
  **741 Tainan City (TW)**

(74) Representative: **Pfrang, Tilman**
**Meissner Bolte Patentanwälte**
**Rechtsanwälte Partnerschaft mbB**
**Widenmayerstraße 47**
**80538 München (DE)**

# (54) PROTON-CONDUCTIVE MEMBRANE

(57) A proton-conductive membrane includes a hydrophobic organic polymer and a hydrophilic proton-conductive component. The hydrophilic proton-conductive component includes one of a urea-containing material and a complex formed from an acidic substance and a basic substance, and a combination thereof. The hydrophilic proton-conductive component is present in an amount ranging from 23 parts by weight to 70 parts by weight based on 100 parts by weight of the proton-conductive membrane.

EP 3 940 831 A1

## Description

### CROSS-REFERENCE TO RELATED APPLICATION

This application claims priority of Taiwanese Invention Patent Application No. 109124284, filed on July 17, 2020.

### FIELD

The disclosure relates to a membrane, and more particularly to a proton-conductive membrane.

### BACKGROUND

A vanadium flow battery (VFB), for instance, an all-vanadium redox flow battery (VRFB), has advantageous properties such as fast response time, long cycle life, relatively safe, and high flexibility in design of power and energy scale. Thus, the VRFB is one of the most widely researched energy storage devices.

Proton-conductive membrane is one of the key components that influence the performance of the VRFB. Currently, a conventional proton-conductive membrane used in the VRFB is a Nafion® membrane produced by DuPont. However, in use, the Nafion® membrane immersed in electrolyte of the VRFB is susceptible to swelling, which might give rise to safety issues.

### SUMMARY

Therefore, an object of the disclosure is to provide a proton-conductive membrane that can alleviate at least one of the drawbacks of the prior art.

According to the disclosure, the proton-conductive membrane includes a hydrophobic organic polymer and a proton-conductive component. The proton-conductive component includes one of a urea-containing hydrophilic material, a hydrophilic complex formed from an acidic substance and a basic substance, and a combination thereof . The proton-conductive component is present in an amount ranging from 23 to 70% by weight based on total weight of the proton-conductive membrane.

By virtue of controlling the constituents and amounts of the hydrophobic organic polymer and the proton-conductive component, the proton-conductive membrane of this disclosure has an excellent proton conductivity and a reduced swelling property, and is capable of effectively reducing the diffusion of vanadium ions, i.e., a decreased permeability to vanadium ions. Moreover, the proton-conductive membrane of this disclosure is capable of assisting in improving the safety of the battery, resulting from a lower swelling property thereof.

### DETAILED DESCRIPTION

The present disclosure provides a proton-conductive membrane which includes a hydrophobic organic polymer and a proton-conductive component.

In certain embodiments, the proton-conductive membrane may have an equilibrium swelling ratio less than 1.1 after being immersed in water. The proton-conductive membrane may have a crystalline phase.

The hydrophobic organic polymer may be, for instance, a soluble hydrophobic organic polymer or a thermoplastic hydrophobic organic polymer that is dissolved in an organic solvent. The hydrophobic organic polymer may have a hydrophobic functional group. Examples of the hydrophobic functional group may include, but are not limited to, a fluoro group, a siloxane group, a lipophilic group, an alkenyl group, an ester group, an ether group, an amine group, an amide group, an aryl group, and combinations thereof. Examples of the hydrophobic organic polymer may include, but are not limited to, polyimide, epoxy resin, polybenzimidazole, polyetherketone, polyamide, polyurethane resin, melamine formaldehyde resin, nitrile butadiene rubber, polypropylene, polyethylene, polystyrene, polyvinylidene difluoride, and combinations thereof.

The proton-conductive component may a hydrophilic proton-conductive component. The proton-conductive component may be present in an amount ranging from 23 to 70% by weight based on total weight of the proton-conductive membrane. In certain embodiments, the proton-conductive component is present in an amount ranging from 35 to 70% by weight based on total weight of the proton-conductive membrane. As such, the proton-conductive membrane may have an improved electrical performance, such as a higher energy efficiency or a higher voltage efficiency.

The proton-conductive component may include a urea-containing hydrophilic material and/or a hydrophilic complex which is formed from an acidic substance and a basic substance.

In certain embodiments, the acidic substance is reacted with the basic substance to produce the hydrophilic complex. The acidic substance may be a Lewis acid, or a Bronsted-Lowry acid. Examples of the acidic substance may

include, but are not limited to, sulphuric acid, hydrochloric acid, polyphosphoric acid, pyrophosphoric acid, cyanuric acid, oxalic acid, phosphoric acid, sulphonic acid, and combinations thereof. The basic substance may be a Lewis base, or a Bronsted-Lowry base. Examples of the basic substance may include, but are not limited to, melamine, a metal salt, and a combination thereof. The metal of the metal salt may include, but is not limited to, sodium, potassium, iron, magnesium, manganese, etc. The complex may have anacidophilic group. The acidophilic group may include, but is not limited to, an amine group, a sulphate group and a sulphonic group. Examples of the complex may include, but are not limited to, melamine sulphate, melamine hydrochloride, melamine polyphosphate, melamine pyrophosphate, melamine cyanurate, melamine oxalate, a metal phosphate, and combinations thereof.

The urea-containing hydrophilic material is capable of reducing compact stacking of the hydrophobic organic polymer. The urea-containing hydrophilic material has a carbamide group, i.e.,

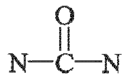
,

and may include one of a 5-membered heterocyclic compound, a 6-membered heterocyclic compound, and a combination thereof. In certain embodiments, each of the 5-membered heterocyclic compound and the 6-membered heterocyclic compound may have at least one carbonyl group. Examples of the 5-membered heterocyclic compound may include, but are not limited to, 2-hydroxybenzimidazole, allantion, 4-phenyl-3H-1,2,4-triazole-3,5(4H)-dione, hydantoin, and combinations thereof. Examples of the 6-membered heterocyclic compound may include, but are not limited to, cyanuric acid, triallyl isocyanurate, tris(2-acryloyloxy ethyl) isocyanurate, bis(acryloxyethyl) isocyanurate, triglycidyl isocyanurate, tris(3-(trimethoxysilyl) propyl) isocyanurate, tris(2-hydroxyethyl) isocyanurate, uricacid (e.g., 1,3-dimethyluric acid), trichloroisocyanuric acid, barbituric acid, violuric acid, thymine, etc. In certain embodiments, the urea-containing hydrophilic material is selected from the group consisting of cyanuric acid, 2-hydroxybenzimidazole, triallyl isocyanurate, tris (2-acryloyloxyethyl) isocyanurate, bis(acryloxyethyl) isocyanurate, triglycidyl isocyanurate, tris(3-(trimethoxysilyl) propyl) isocyanurate, tris(2-hydroxyethyl) isocyanurate, allantoin, 4-phenyl-3H-1,2,4-triazole-3,5-dione, uric acid, trichloroisocyanuric acid, hydantoin, barbituric acid, violuric acid, thymine, and combinations thereof.

When the proton-conductive component includes the urea-containing hydrophilic material, the proton-conductive component may further include an amine compound for further assisting the dispersion of the urea-containing hydrophilic material in the hydrophobic organic polymer so as to reduce phase separation, which is conducive for the formation of the proton-conductive membrane. It is noted that amine group of the amine compound forms a hydrogen bond with the carbamide group of the urea-containing hydrophilic material. The hydrogen bond thus formed may increase stability of the proton-conductive membrane during manufacturing process thereof. Examples of the amine compound may include, but are not limited to, adenine, guanine, cytosine, uracil, melamine, aminopyridine, aminopiperidine, aminopyrimidine, and combinations thereof. In certain embodiments, the urea-containing hydrophilic material is present in an amount not smaller than 50% by weight based on total weight of the proton-conductive component. In other embodiments, based on total weight of the proton-conductive component, the amine compound is present in an amount smaller than 50% by weight.

The proton-conductive membrane of this disclosure is demonstrated to have a low swelling property, a low permeability to vanadium ions, and proton conductivity, and therefore may be applied in VFB, such as VRFB.

A method for preparing the proton-conductive membrane of this disclosure may include the following steps.

First, the hydrophobic organic polymer, the proton-conductive component and an organic solvent are subj ected to a mixing process to obtain a mixture. Conditions of the mixing process (e.g., temperature or duration) may be adjusted in accordance with the amounts and types of the hydrophobic organic polymer, the proton-conductive component and the organic solvent to be used. In certain embodiments, the mixing process is conducted at a temperature ranging from 60°C to 100°C for a time period ranging from 2 hours to 4 hours . Examples of the organic solvent may include, but are not limited to, N-methyl-2-pyrrolidone, 2-pyrrolidone, N,N-dimethylformamide, N,N-dimethylacetamide, γ- butyrolactone, dichlorobenzene, dioxane, toluene, xylene, chloroform, acetone, butanone, ethanol, methanol, and combinations thereof. Based on 100 parts by weight of the organic solvent, the hydrophobic organic polymer and the proton-conductive component are present in a total amount which ranges from 10 parts by weight to 30 parts by weight.

Then, the mixture is applied onto a substrate to form a coating film on the substrate. In certain embodiments, the mixture is applied onto the substrate by a suitable coating process such as blade coating, spin coating, spray coating, etc.

The resultant coating film is then subjected to a heat treatment to remove the organic solvent, so as to obtain the proton-conductive membrane with desired compactness. The heat treatment may be performed at a temperature in accordance with constituent of the mixture. In certain embodiments, the heat treatment is conducted at a temperature ranging from 60°C to 250°C.

Examples of the disclosure will be described hereinafter. It is to be understood that these examples are exemplary and explanatory and should not be construed as a limitation to the disclosure.

**Examples**

**General Experimental Materials**

1. Hydrophobic organic polymer:
Polybenzimidazole (PBI) (Model No.: PBI), polyimide (Model No. : BT-PI) and epoxy resin (Model No. : PIDA) were purchased from Microcosm Technology Co., Ltd.
2. Hydrophilic proton-conductive component as the proton-conductive component:

   (a) Urea-containing hydrophilic material:
   Cyanuric acid and allantoin were both purchased from Echo Chemical Co., Ltd.
   (b) Hydrophilic complex formed from an acidic substance and a basic substance:
   Melamine cyanurate and melamine sulphate were both purchased from Echo Chemical Co., Ltd.
   (c)Amine compound:
   Melamine was purchased from Echo Chemical Co., Ltd.

3. Organic solvent:
N-methyl-2-pyrrolidone was purchased from Echo Chemical Co., Ltd.

**<Example 1 (E1)>**

6.5 g (65 parts by weight) of polybenzimidazole (PBI, produced by Microcosm Technology Co. , LTD. , Model No. : PBI), 3.5 g (35 parts by weight) of cyanuric acid and 40.0 g (400 parts by weight) of N-methyl-2-pyrrolidone (produced by Echo Chemical Co., Ltd.) were mixed under stirring at 60°C and 1 atm for 2 hours, so as to obtain a colloid mixture. In other words, in the colloid mixture, the hydrophobic organic polymer and the hydrophilic proton-conductive component were present in a total amount of 100 parts by weight. The colloid mixture was coated on a glass substrate to form a coating film having a thickness of 500 μm. The coating film was subjected to a heat treatment which includes a drying treatment conducted at 140°C for 3 minutes, followed by a curing treatment conducted at 250°C for 1 hour, so that a proton-conductive membrane of E1 having a thickness of 50 μm was obtained. During the drying treatment, a majority of the organic solvent (i.e., N-methyl-2-pyrrolidone) was removed, so as to reduce the amount of bubbles generated during the curing treatment, thereby allowing the resultant proton-conductive membrane to have a desired compactness.

**<Examples 2 to 18 (E2 to E18)>**

The proton-conductive membranes of E2 to E18 were prepared by procedures similar to those of E1, except that the constituents and/or added amounts of the hydrophobic organic polymer and/or the hydrophilic proton-conductive component used in each of E2 to E18 were varied as shown in Table 1.

**<Comparative Examples 1 to 3 (CE1 to CE3)>**

The proton-conductive membranes of CE1 to CE3 were prepared by procedures similar to those of E1, except that the constituents and added amounts of the hydrophobic organic polymer used in each of CE1 to CE3 were varied as shown in Table 1. In addition, the hydrophilic proton-conductive component was dispensed with in CE1 and CE2, and only the amine compound serving as the hydrophilic proton-conductive component was used in CE3.

**<Comparative Example 4 (CE4)>**

A porous proton-conductive membrane of CE4 was prepared by procedures generally similar to those of CE2, except that 3.3 g (33 parts by weight) of dibutyl phthalate (purchased from Echo Chemical Co. , Ltd.) serving as a pore-making agent was further added as shown in Table 1, so as to obtain the colloid mixture. In addition, after the heat treatment, the resultant membrane was further immersed in methanol for 24 hours, followed by subjecting to a drying process at 100°C for 1 hour, so as to obtain the porous proton-conductive membrane of CE4 having a thickness of 50 μm for further analysis.

**<Comparative Example 5 (CE5)>**

The proton-conductive membrane of CE5 was a Nafion™ 212 membrane (Manufacturer: DuPont, Inc.) having a thickness of 50 μm, and made of sulfonated polytetrafluoroethylene copolymer.

Table 1

| | Hydrophobic organic polymer (parts by weight) | | | Hydrophilic proton-conductive component (parts by weight) | | | | | Dibutyl phthalate (parts by weight) |
|---|---|---|---|---|---|---|---|---|---|
| | | | | Urea-containing hydrophilic material | | Amine compound | Hydrophilic Complex | | |
| | Polyimide | Epoxy resin | PBI | Cyanuric acid | Allantoin | Melamine | Melamine cyanurate | Melamine sulphate | |
| E1 | 0 | 0 | 65 | 35 | 0 | 0 | 0 | 0 | 0 |
| E2 | 0 | 65 | 0 | 35 | 0 | 0 | 0 | 0 | 0 |
| E3 | 65 | 0 | 0 | 35 | 0 | 0 | 0 | 0 | 0 |
| E4 | 75 | 0 | 0 | 25 | 0 | 0 | 0 | 0 | 0 |
| E5 | 50 | 0 | 0 | 50 | 0 | 0 | 0 | 0 | 0 |
| E6 | 50 | 0 | 0 | 35 | 15 | 0 | 0 | 0 | 0 |
| E7 | 65 | 0 | 0 | 0 | 35 | 0 | 0 | 0 | 0 |
| E8 | 75 | 0 | 0 | 0 | 0 | 0 | 25 | 0 | 0 |
| E9 | 50 | 0 | 0 | 0 | 0 | 0 | 50 | 0 | 0 |
| E10 | 50 | 0 | 0 | 25 | 0 | 25 | 0 | 0 | 0 |
| E11 | 50 | 0 | 0 | 30 | 0 | 20 | 0 | 0 | 0 |
| E12 | 45 | 0 | 0 | 33 | 0 | 22 | 0 | 0 | 0 |
| E13 | 40 | 0 | 0 | 36 | 0 | 24 | 0 | 0 | 0 |
| E14 | 0 | 40 | 0 | 36 | 0 | 24 | 0 | 0 | 0 |
| E15 | 0 | 0 | 40 | 36 | 0 | 24 | 0 | 0 | 0 |
| E16 | 20 | 20 | 0 | 36 | 0 | 24 | 0 | 0 | 0 |
| E17 | 40 | 0 | 0 | 0 | 0 | 0 | 60 | 0 | 0 |
| E18 | 40 | 0 | 0 | 0 | 0 | 0 | 0 | 60 | 0 |
| CE1 | 100 | 0 | 0 | 0 | 0 | 0 | 0 | 0 | 0 |
| CE2 | 0 | 0 | 100 | 0 | 0 | 0 | 0 | 0 | 0 |
| CE3 | 50 | 0 | 0 | 0 | 0 | 50 | 0 | 0 | 0 |
| CE4 | 0 | 0 | 100 | 0 | 0 | 0 | 0 | 0 | 33 |

## Property evaluations

### Measurement of equilibrium swelling ratio

Each of the proton-conductive membranes of E1 to E18 and CE1 to CE5 was cut into a testing sheet having a dimension of 10 cm × 10 cm, and then dried under vacuum condition at 100°C for 24 hours. The length, width and thickness of each of the resultant dried testing sheets were measured to calculate a volume thereof ($V_0$, in $cm^3$). Each of the dried testing sheets was then immersed in water having a temperature of 80°C for 1 day to obtain a respective one of immersed testing sheets . The length, width and thickness of each of the immersed testing sheets were measured to calculate a volume thereof (V, in $cm^3$). Equilibrium swelling ratio for each of the proton-conductive membranes of E1 to E18 and CE1 to CE5 was determined as $V/V_0$. The results are shown in Tables 2 and 3.

### Measurement of porosity (%)

Each of the proton-conductive membrane of E1 to E18 and CE1 to CE5 was subjected to measurement of porosity using a Mercury Porosimeter (Manufacturer: Micromeritics Instrument Co.; Model No.: AutoPore® IV 9520). The results are shown in Tables 2 and 3.

### Measurement of tensile strength (MPa) and elongation at break (%)

Each of the proton-conductive membrane of E1 to E18 and CE1 to CE5 was subjected to measurement of tensile strength and elongation at break using a tensile testing machine (Manufacturer: Lloyd Instruments Ltd.; Model No. : LRX) at a stretching speed of 100 mm/min. The results are shown in Tables 2 and 3.

### Measurement of acid absorption (%)

The weight of each of the proton-conductive membranes of E1 to E18 and CE1 to CE5 was measured as $W_0$ (g), and then each of the proton-conductive membranes was immersed in a sulphuric acid solution (with a concentration of 3 M) at 40°C for 7 days so as to obtain a respective one of acid-immersed proton-conductive membranes. Each of the acid-immersed proton-conductive membranes was wiped to remove the sulphuric acid solution remaining on a surface thereof, and was then weighed as W (g). The acid absorption for each of the proton-conductive membranes was determined as $[(W-W_0)/W_0] \times 100\%$. The results are shown in Tables 2 and 3.

### Measurement of proton conductivity (mS/cm)

The impedance value of each of the proton-conductive membranes of E1 to E18 and CE1 to CE5 was measured using a four-probe electrochemical impedance spectroscopy (BekkTech LLC, USA) at 25°C by means of AC impedance analysis. The proton conductivity was determined according to the following equation (1). The results are shown in Tables 2 and 3.

$$C = 1/[(I \times a \times b)/d] \quad (1)$$

wherein:

C = proton conductivity (mS/cm)
I = impedance value of the proton-conductive membrane (Ω)
a = width of the proton-conductive membrane (cm)
b = thickness of the proton-conductive membrane (cm)
d = distance between reference electrodes of the spectroscopy (cm)

### Measurement of vanadium ion diffusion rate ($cm^2$/min)

A vanadium solution (1 M) was prepared by dissoving vanadyl sulphate ($VOSO_4$) in a sulphuric acid solution having a concentration of 2.5 M. A magnesium solution (1M) was prepared by dissoving magnesium sulphate ($MgSO_4$) in the sulphuric acid solution having a concentration of 2.5 M. Each of the proton-conductive membrane of E1 to E18 and CE1 to CE5 was disposed in a container so as to divide an accommodating space of the container into a left compartment and a right compartment. The vanadium solution and the magnesium solution were respectively introduced

into the left compartment and the right compartment, so as to allow the vanadium ions in the vanadium solution to pass through the proton-conductive membrane into the magnesium solution. A light with a wavelength of 766 nm was irridated on the vanadium solution and the magnesium solution. Absorbance of each of the solutions ($A_v$ for the vanadium solution, and $A_{Mg}$ for the magnesium solution) at different time points (min) measured was determined using an ultraviolet-visible spectroscopy according to Fick' s Law and Beer' s Law. $\ln(A_v-2A_{Mg})$ was plotted against the time point (min) measured to obtain the following equation (2), so as to calculate a mass transfer coefficient ($k_s$).

$$\ln(A_V-2A_{Mg}) = \ln A_V-[(2\times k_s\times A\times t)/V_{Mg}] \quad (2)$$

wherein:

$A_v$ = absorbance of the vanadium solution
$A_{Mg}$ =absorbance of the magnesium solution
$k_s$ = mass transfer coefficient (cm/min)
A = contacting area between the proton-conductive membrane and the solution ($cm^2$)
t = time point (min) measured
$V_{Mg}$ = volume of the right compartment ($cm^3$)

The vanadium ion diffusion rate ($cm^2$/min) was calculated by substituting the mass transfer coefficient into the following equation (3) . The results are shown in Tables 2 and 3.

$$D = k_s \times y \quad (3)$$

wherein:

D = diffusion rate of the vanadium ion ($cm^2$/min)
$k_s$ = mass transfer coefficient (cm/min)
y = thickness of the proton-conductive membrane (cm)

**Measurement of coulombic efficiency (%), voltage efficiency (%) and energy efficiency (%)**

Each of the proton-conductive membranes of E1 to E18 and CE1 to CE5 was used in combinations with a polyvinyl chloride frame, a graphite felt electrode, a bipolar plate and 100 mL of an electrolyte for preparing a respective one of monocells of E1 to E18 and CE1 to CE5. The monocell had an effective area of 5 cm × 5 cm. The electrolyte was prepared by dissolving 456 g of $VOSO_4$ powder into 1000 mL of a sulphuric acid solution having a concentration of 3 M. Each of the monocells of E1 to E18 and CE1 to CE5 was subjected to a charging process and a discharging process where quantities of electric charge were measured using a charge-discharge tester (Manufacturer: Chroma ATE Inc.;Model No.:Model 17011). The coulombic efficiency, voltage efficiency, and energy efficiency of the monocells were calculated based on the measured quantities of electric charge under condition of a current density of 120 mA/$cm^2$, a cutoff voltage ranging from 0.7 V to 1.6 V, and a flow velocity of 50 mL/min. An averaged energy efficiency (%) was also determined by calculating an average value of measured energy efficiencies from each of 500 cycles of the charging and discharging processes. The results are shown in Tables 2 and 3.

Table 2

| | E1 | E2 | E3 | E4 | E5 | E6 | E7 | E8 | E9 | E10 | E11 | E12 |
|---|---|---|---|---|---|---|---|---|---|---|---|---|
| Equilibrium swelling ratio | 1.03 | 1.03 | 1.03 | 1.02 | 1.02 | 1.05 | 1.03 | 1.02 | 1.04 | 1.05 | 1.03 | 1.03 |
| Porosity (%) | <1 | <1 | <1 | <1 | <1 | <1 | <1 | <1 | <1 | <1 | <1 | <1 |
| Tensile strength (MPa) | 32 | 30 | 45 | 60 | 67 | 31 | 33 | 70 | 39 | 33 | 34 | 29 |
| Elongation at break (%) | 2 | 1 | 4 | 8 | 8 | 2 | 2 | 9 | 3 | 2 | 2 | 1 |

(continued)

| | E1 | E2 | E3 | E4 | E5 | E6 | E7 | E8 | E9 | E10 | E11 | E12 |
|---|---|---|---|---|---|---|---|---|---|---|---|---|
| Acid absorption (%) | 3 | 3 | 3 | 3 | 2 | 3 | 3 | 3 | 3 | 2 | 4 | 4 |
| Proton conductivity (mS/cm) | 3 | 3 | 3 | 3 | 2 | 8 | 3 | 3 | 3 | 2 | 3 | 4 |
| Vanadium ion diffusion rate ($cm^2$/min) | 35 | 31 | 32 | 10 | 6 | 37 | 45 | 11 | 116 | 132 | 37 | 45 |
| Coulombic efficiency (%) | 97 | 97 | 97 | 99 | 99 | 96 | 97 | 99 | 96 | 95 | 97 | 97 |
| Voltage efficiency (%) | 81 | 80 | 82 | 70 | 61 | 86 | 81 | 68 | 80 | 78 | 81 | 81 |
| Energy efficiency (%) | 79 | 78 | 79 | 69 | 56 | 83 | 79 | 67 | 78 | 75 | 79 | 79 |
| Averaged energy efficiency (%) | 76 | 74 | 76 | 66 | - | 80 | 76 | 62 | 74 | 71 | 76 | 76 |
| Note: "-" indicates not available | | | | | | | | | | | | |

Table 3

| | E13 | E14 | E15 | E16 | E17 | E18 | CE1 | CE2 | CE3 | CE4 | CE5 |
|---|---|---|---|---|---|---|---|---|---|---|---|
| Equilibrium swelling ratio | 1.03 | 1.04 | 1.03 | 1.04 | 1.05 | 1.05 | 1 | 1 | 1.02 | 1.1 | 1.35 |
| Porosity (%) | <1 | <1 | <1 | <1 | <2 | <2 | <1 | <1 | <1 | 24 | 8 |
| Tensile strength (MPa) | 25 | 30 | 36 | 10 | 21 | 24 | 110 | 145 | 31 | 80 | 26 |
| Elongation at break (%) | 1 | 3 | 16 | 98 | 2 | 3 | 2 | 9 | 2 | 3 | 301 |
| Acid absorption (%) | 5 | 3 | 10 | 11 | 5 | 8 | <1 | <1 | 2 | 30 | 38 |
| Proton conductivity (mS/cm) | 4 | 3 | 8 | 4 | 4 | 6 | <1 | <1 | <1 | 3 | 4 |
| Vanadium ion diffusion rate ($cm^2$/min) | 49 | 57 | 37 | 49 | 62 | 88 | 8 | 5 | 20 | 581 | 62 |
| Coulombic efficiency (%) | 97 | 96 | 96 | 97 | 96 | 96 | 0 | 0 | 0 | 92 | 97 |
| Voltage efficiency (%) | 82 | 80 | 86 | 81 | 82 | 84 | 0 | 0 | 0 | 81 | 82 |
| Energy efficiency (%) | 80 | 77 | 83 | 79 | 78 | 80 | 0 | 0 | 0 | 75 | 80 |
| Averaged energy efficiency (%) | 76 | 70 | 80 | 75 | 75 | 77 | 0 | 0 | 0 | 68 | 73 |

Referring to Tables 2 and 3, each of the proton-conductive membranes of E1 to E18 has a relatively lower equilibrium swelling ratio when compared with those of CE4 and CE5. This indicates that the proton-conductive membrane of this disclosure is less susceptible to swelling, so as to improve safety of a battery produced therefrom. In addition, each of the proton-conductive membranes of E1 to E8 and E11 to E16 has a vanadium ion diffusion rate lower than that of CE5, and each of the proton-conductive membranes of E1 to E18 has a vanadium ion diffusion rate lower than that of CE4. Such results demonstrate that the proton-conductive membrane of this disclosure is conferred with a low permeability to vanadium ions.

On the other hand, each of the proton-conductive membranes of CE1 to CE3, which do not include the urea-containing hydrophilic material and/or the hydrophilic complex formed from the acidic and basic substances, exhibits poor proton conductivity, and thus may not be suitably used in a battery. In comparison, each of proton-conductive membranes of E1 to E18 which includes the hydrophilic proton-conductive component has an excellent proton conductivity, and thus can be favourably applied to a battery.

As shown in Table 3, each of the proton-conductive membranes of CE1 to CE3 has a coulombic efficiency, voltage efficiency, and energy efficiency of zero. This is because the electric power cannot be measured, resulting from the breaker being tripped. Such results reflect that safety of a battery can be improved by the proton-conductive membrane of this disclosure.

In conclusion, by virtue of controlling the constituents and amounts of the hydrophobic organic polymer and the hydrophilic proton-conductive component, the proton-conductive membrane of this disclosure has a reduced swelling property and an excellent proton conductivity, and is capable of effectively reducing the diffusion of vanadium ions, i.e., a decreased permeability to vanadium ions.

## Claims

1. A proton-conductive membrane, comprising:

    a hydrophobic organic polymer; and
    a proton-conductive component which includes one of a urea-containing hydrophilic material, a hydrophilic complex formed from an acidic substance and a basic substance, and a combination thereof,
    wherein said hydrophilic proton-conductive component is present in an amount ranging from 23 to 70% by weight based on total weight of said proton-conductive membrane.

2. The proton-conductive membrane of claim 1, wherein said hydrophobic organic polymer has a hydrophobic functional group selected from the group consisting of a fluoro group, a siloxane group, a lipophilic group, an alkenyl group, an ester group, an ether group, an amine group, an amide group, an aryl group, and combinations thereof.

3. The proton-conductive membrane of claim 2, wherein said hydrophobic organic polymer is selected from the group consisting of polyimide, epoxy resin, polybenzimidazole, polyetherketone, polyamide, polyurethane resin, melamine formaldehyde resin, nitrile butadiene rubber, polypropylene, polyethylene, polystyrene, polyvinylidene difluoride, and combinations thereof.

4. The proton-conductive membrane of claim 1, wherein said proton-conductive component is present in an amount ranging from 35 to 70% by weight based on total weight of said proton-conductive membrane.

5. The proton-conductive membrane of claim 1, wherein said proton-conductive component includes said hydrophilic complex, and said acidic substance is selected from the group consisting of sulphuric acid, hydrochloric acid, polyphosphoric acid, pyrophosphoric acid, cyanuric acid, oxalic acid, phosphoric acid, sulphonic acid, and combinations thereof.

6. The proton-conductive membrane of claim 5, wherein said basic substance is selected from the group consisting of melamine, a metal salt, and a combination thereof.

7. The proton-conductive membrane of claim 6, wherein said hydrophilic complex is selected from the group consisting of melamine sulphate, melamine hydrochloride, melamine polyphosphate, melamine pyrophosphate, melamine cyanurate, melamine oxalate, a metal phosphate, and combinations thereof.

8. The proton-conductive membrane of claim 1, wherein said proton-conductive component includes said urea-containing hydrophilic material which includes one of a 5-membered heterocyclic compound and a 6-membered heterocyclic compound, and a combination thereof.

9. The proton-conductive membrane of claim 8, wherein said urea-containing material is selected from the group consisting of cyanuric acid, 2-hydroxybenzimidazole, triallyl isocyanurate, tris(2-acryloyloxy ethyl) isocyanurate, bis(acryloxyethyl) isocyanurate, triglycidyl isocyanurate, tris(3-(trimethoxysilyl) propyl) isocyanurate, tris(2-hydroxyethyl) isocyanurate, allantoin, 4-phenyl-3H-1,2,4-triazole-3,5-dione, uric acid, trichloroisocyanuricacid, hydantoin, barbituric acid, violuric acid, thymine, and combinations thereof.

10. The proton-conductive membrane of claim 1, wherein when said proton-conductive component includes said urea-containing hydrophilic material, said proton-conductive component further includes an amine compound.

11. The proton-conductive membrane of claim 10, wherein said amine compound is selected from the group consisting of adenine, guanine, cytosine, uracil, melamine, aminopyridine, aminopiperidine, aminopyrimidine, and combinations thereof.

12. The proton-conductive membrane of claim 10, wherein said urea-containing hydrophilic material is present in an amount not smaller than 50% by weight based on total weight of said proton-conductive component.

Europäisches Patentamt
European Patent Office
Office européen des brevets

# EUROPEAN SEARCH REPORT

Application Number
EP 21 18 5519

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | CN 111 416 140 A (UNIV SHANDONG TECHNOLOGY) 14 July 2020 (2020-07-14)<br>* paragraphs [0001], [0034] *<br>* page 4; example 4 *<br>* claim 1 *<br>----- | 1-4,8-12<br>5-7 | INV.<br>H01M8/1018<br>B01D24/00 |
| X<br>A | CN 111 205 641 A (UNIV SHANDONG TECHNOLOGY) 29 May 2020 (2020-05-29)<br>* paragraphs [0001], [0046] - [0051] *<br>* example 5 *<br>----- | 1-4<br>5-12 | |
| A | WANG YAN ET AL: "Polybenzimidazole (PBI) Membranes for Phenol Dehydration via Pervaporation",<br>INDUSTRIAL & ENGINEERING CHEMISTRY RESEARCH,<br>vol. 53, no. 47,<br>28 October 2014 (2014-10-28), pages 18291-18303, XP055870299,<br>ISSN: 0888-5885, DOI: 10.1021/ie502626s<br>* abstract *<br>* page 18293, right-hand column, last paragraph *<br>* page 18294, right-hand column, paragraph first *<br>-----<br>-/-- | 1-12 | TECHNICAL FIELDS SEARCHED (IPC)<br>B01D<br>H01M |

1 The present search report has been drawn up for all claims

| Place of search | Date of completion of the search | Examiner |
|---|---|---|
| The Hague | 8 December 2021 | Grave, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 21 18 5519

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAJABI ZAHRA ET AL: "High temperature composite membranes based on polybenzimidazole and dendrimer amine functionalized SBA-15 mesoporous silica for fuel cells", NEW JOURNAL OF CHEMISTRY, vol. 44, no. 13, 10 February 2020 (2020-02-10), pages 5001-5018, XP055870242, GB ISSN: 1144-0546, DOI: 10.1039/C9NJ05369G | 1-7 | |
| A | * abstract * * sections 2.1-2.4 * * page 5012, right-hand column, last paragraph * * figure 3 * ----- | 8-12 | |

TECHNICAL FIELDS SEARCHED (IPC)

1 The present search report has been drawn up for all claims

| Place of search | Date of completion of the search | Examiner |
|---|---|---|
| The Hague | 8 December 2021 | Grave, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO.

EP 21 18 5519

This annex lists the patent family members relating to the patent documents cited in the above-mentioned European search report. The members are as contained in the European Patent Office EDP file on
The European Patent Office is in no way liable for these particulars which are merely given for the purpose of information.

08-12-2021

| Patent document cited in search report | | Publication date | Patent family member(s) | Publication date |
|---|---|---|---|---|
| CN 111416140 | A | 14-07-2020 | NONE | |
| CN 111205641 | A | 29-05-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- TW 109124284